(19) Europäisches Patentamt
European Patent Office
Office européen des brevets

(11) **EP 3 677 619 A1**

(12) **EUROPEAN PATENT APPLICATION**
published in accordance with Art. 153(4) EPC

(43) Date of publication:
**08.07.2020 Bulletin 2020/28**

(51) Int Cl.:
***C08J 3/16*** (2006.01)     ***C08K 3/04*** (2006.01)
***G02F 1/1339*** (2006.01)

(21) Application number: **18850191.0**

(22) Date of filing: **30.08.2018**

(86) International application number:
**PCT/JP2018/032217**

(87) International publication number:
**WO 2019/045004 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2017 JP 2017168362**

(71) Applicant: **Sekisui Chemical Co., Ltd.**
**Osaka-shi, Osaka 530-8565 (JP)**

(72) Inventors:
• **YAMADA, Yasuyuki**
  **Kouka-shi**
  **Shiga 528-8585 (JP)**
• **NAKAJIMA, Minoru**
  **Kouka-shi**
  **Shiga 528-8585 (JP)**
• **UEDA, Saori**
  **Kouka-shi**
  **Shiga 528-8585 (JP)**

(74) Representative: **Ter Meer Steinmeister & Partner**
**Patentanwälte mbB**
**Nymphenburger Straße 4**
**80335 München (DE)**

(54) **COMPOSITE PARTICLES, COMPOSITE-PARTICLE POWDER, AND LIGHT-MODULATING MATERIAL**

(57)     Provided is a composite particle capable of effectively suppressing the occurrence of color unevenness in a light-modulating material and effectively enhancing the light-modulating performance. The composite particle according to the present invention contains a pigment and has a particle diameter of 10 $\mu$m or more and 100 $\mu$m or less.

[FIG. 1.]

**Description**

**TECHNICAL FIELD**

The present invention relates to a composite particle containing a pigment. The present invention also relates to a composite-particle powder and a light-modulating material in which the composite particle is used.

**BACKGROUND ART**

Light-modulating materials such as dimming glass or a dimming film are objects which exhibit property of being able to change the state between a transparent state and an opaque state depending on the presence or absence of application of voltage and can adjust the incident light quantity, haze, and the like. In addition, the light-modulating materials are roughly classified into SPD (Suspended Particle Device) type and PDLC (Polymer Dispersed Liquid Crystal) type depending on the action mechanism of the state change between a transparent state and an opaque state.

Light-modulating materials are formed, for example, by disposing a light-modulating layer containing liquid crystal and the like between two substrates of glass and film. In the light-modulating materials, a spacer is sometimes used as a gap control material in order to control the space between two substrates and to maintain the thickness of a proper light-modulating layer. Resin particles are generally used as the spacer.

In addition, the spacer is required to be colored in a dark color in order to prevent light leakage through which light is transmitted from the spacer portion and to suppress the occurrence of color unevenness in the light-modulating material.

As an example of the particles used as the spacer, Patent Document 1 below discloses colored particles in which macromolecular particles are dyed with a dye. The macromolecular particles are obtained by copolymerizing a monomer having an ethylenically unsaturated group and a monomer having an ethylenically unsaturated group and an epoxy group.

In addition, Patent Document 2 below discloses a spacer for a liquid crystal display element in which a hot-melt adhesive layer is formed on the surface of a resin sphere. The adhesive constituting the hot-melt adhesive layer is a (meth)acrylic acid ester polymer or copolymer. The weight average molecular weight (Mw) of the adhesive is 100,000 or more and 500,000 or less. The ratio (Mw/Mn) of the weight average molecular weight (Mw) to the number average molecular weight (Mn) of the adhesive is 2.0 or more and 2.5 or less. The glass transition temperature of the adhesive is 60°C or more and 90°C or less. Patent Document 2 describes that the resin sphere is a colored polymer particle in which a pigment is uniformly dispersed inside a polymer particle.

**Related Art Document**

**Patent Document**

Patent Document 1: JP H4-103633 A
Patent Document 2: JP H8-101394 A

**SUMMARY OF THE INVENTION**

**PROBLEMS TO BE SOLVED BY THE INVENTION**

In the light-modulating materials used for vehicles and the like, the space between two substrates is sometimes widened and the thickness of the light-modulating layer is sometimes thickened in order to enhance the light-modulating performance to adjust the incident light quantity, haze, and the like. In the conventional spacer as described in Patent Document 2, the particle diameter of the spacer is small, and thus it is impossible to sufficiently widen the space between the two substrates in the light-modulating material and it is difficult to increase the thickness of the light-modulating layer. As a result, the light-modulating performance to adjust the incident light quantity, haze, and the like sometimes decrease in the light-modulating material.

In addition, in the conventional spacer as described in Patent Document 1, the spacer is colored with a dye, and thus it is impossible to sufficiently enhance the light blocking property of the spacer and light leakage sometimes occur. Moreover, in the conventional spacer as described in Patent Document 1, the dye sometimes seep into the light-modulating layer. As a result, color unevenness sometimes occur in the light-modulating material.

An object of the present invention is to provide a composite particle capable of effectively suppressing the occurrence of color unevenness in a light-modulating material and effectively enhancing the light-modulating performance. Another object of the present invention is to provide a composite-particle powder and a light-modulating material in which the composite particle is used.

## MEANS FOR SOLVING THE PROBLEMS

The present inventors have carried out investigations to solve the above problems and, as a result, have found out a configuration of a particle having a relatively large particle diameter by which it is possible to effectively suppress the occurrence of color unevenness in a light-modulating material and to effectively enhance the light-modulating performance.

According to a broad aspect of the present invention, there is provided a composite particle which contains a pigment and has a particle diameter of 10 $\mu$m or more and 100 $\mu$m or less.

In a specific aspect of the composite particle according to the present invention, a 20% K value is 5000 N/mm$^2$ or more.

In a specific aspect of the composite particle according to the present invention, a fracture strain is 30% or more and 70% or less.

In a specific aspect of the composite particle according to the present invention, a fracture load value is 20 mN or more and 100 mN or less.

In a specific aspect of the composite particle according to the present invention, a total light transmittance is less than 5%.

In a specific aspect of the composite particle according to the present invention, a content of the pigment is 2% by weight or more and 7% by weight or less in 100% by weight of the composite particle.

In a specific aspect of the composite particle according to the present invention, an average particle diameter of the pigment is 50 nm or more and 350 nm or less.

In a specific aspect of the composite particle according to the present invention, the pigment is carbon black.

In a specific aspect of the composite particle according to the present invention, a surface of the carbon black is covered with a polymer.

In a specific aspect of the composite particle according to the present invention, the composite particle is used as a spacer in a light-modulating material capable of changing a state between a transparent state and an opaque state depending on state of voltage application.

In a specific aspect of the composite particle according to the present invention, the light-modulating material is window glass of a vehicle or a partition.

According to a broad aspect of the present invention, there is provided a composite-particle powder which contains a plurality of the composite particles described above and has an average particle diameter of 10 $\mu$m or more and 100 $\mu$m or less.

According to a broad aspect of the present invention, there is provided a light-modulating material containing a first member for light-modulating material, a second member for light-modulating material, and a light-modulating layer disposed between the first member for light-modulating material and the second member for light-modulating material, in which the light-modulating layer contains a plurality of spacers and the spacers are the composite particle described above.

## EFFECT OF THE INVENTION

The composite particle according to the present invention contains a pigment and has a particle diameter of 10 $\mu$m or more and 100 $\mu$m or less and thus can effectively suppress the occurrence of color unevenness in a light-modulating material and effectively enhance the light-modulating performance.

## BRIEF DESCRIPTION OF DRAWINGS

[Fig. 1] Fig. 1 is a cross-sectional view schematically illustrating a PDLC-type light-modulating material using a composite particle according to an embodiment of the present invention as a spacer for light-modulating material.
[Fig. 2] Fig. 2 is a cross-sectional view schematically illustrating a SPD-type light-modulating material using a composite particle according to an embodiment of the present invention as a spacer for light-modulating material.

**MODE(S) FOR CARRYING OUT THE INVENTION**

Hereinafter, the present invention will be described in detail.

(Composite particle)

The composite particle according to the present invention contains a pigment. The composite particle according to the present invention has, for example, a resin portion. The composite particle according to the present invention contains a pigment in, for example, a resin portion. The composite particle according to the present invention is, for example, a resin particle. The particle diameter of the composite particle according to the present invention is 10 $\mu$m or more and 100 $\mu$m or less.

The composite particle according to the present invention is equipped with the above configuration and thus can effectively suppress the occurrence of color unevenness in a light-modulating material and effectively enhance the light-modulating performance.

In addition, in the composite particle according to the present invention, coloring is performed using a pigment instead of a dye and thus the light blocking property of the composite particle can be sufficiently enhanced and the occurrence of light leakage can be effectively prevented. Moreover, in the composite particle according to the present invention, coloring is performed using a pigment instead of a dye and thus the dye does not seep into the light-modulating layer. As a result, the occurrence of color unevenness in the light-modulating material can be effectively suppressed.

Furthermore, the composite particle according to the present invention is equipped with the above configuration, and it is thus possible to effectively enhance the light-modulating performance to adjust the incident light quantity, haze and the like in a light-modulating material when the composite particle is used as a spacer for light-modulating material. For example, in the present invention, the particle diameter of the composite particle is relatively large. For this reason, it is possible to sufficiently widen the space between two substrates in a light-modulating material and to increase the thickness of a light-modulating layer. As a result, in a light-modulating material used for a vehicle and the like, the light-modulating performance to adjust the incident light quantity, haze, and the like can be effectively enhanced.

In the composite particle according to the present invention, the particle diameter of the composite particle is 10 $\mu$m or more and 100 $\mu$m or less. The particle diameter of the composite particle is preferably 12 $\mu$m or more, more preferably 15 $\mu$m or more and preferably 35 $\mu$m or less, more preferably 30 $\mu$m or less, still more preferably 25 $\mu$m or less, particularly preferably 20 $\mu$m or less. When the particle diameter of the composite particle is equal to or more than the lower limit and equal to or less than the upper limit, the space between two substrates in the light-modulating material can be still further widened and the thickness of the light-modulating layer can be still further thickened. As a result, the light-modulating performance to adjust the incident light quantity, haze, and the like can be still further effectively enhanced in a light-modulating material used for a vehicle and the like. In addition, when the particle diameter of the composite particle is equal to or more than the lower limit and equal to or less than the upper limit, the occurrence of color unevenness in the light-modulating material can be still further effectively suppressed. In the application of light-modulating material, it is greatly meaningful that the particle diameter of the composite particle is not less than 10 $\mu$m but is 10 $\mu$m or more. The particle diameter of the composite particle can be appropriately set depending on the application. The composite particle can be suitably used in a light-modulating material application when the particle diameter thereof is 10 $\mu$m or more and 100 $\mu$m or less.

The particle diameter of the composite particle means the diameter when the composite particle has a true spherical shape and means the diameter when the composite particle is assumed to be a true sphere equivalent to the volume when the composite particle has a shape other than a true spherical shape.

The particle diameter of the composite particle can be calculated, for example, by observing an arbitrary composite particle under an electron microscope or an optical microscope.

The aspect ratio of the composite particle is preferably 1.05 or less and more preferably 1.02 or less. The lower limit of the aspect ratio of the composite particle is not particularly limited. The aspect ratio of the composite particle may be 1 or more. The aspect ratio of the composite particle denotes major axis/minor axis. The composite particle can be suitably used in a light-modulating material application when the aspect ratio of the composite particle is equal to or less than the upper limit.

In the case of a plurality of composite particles, the aspect ratio is determined by observing 10 arbitrary composite particles under an electron microscope or an optical microscope, taking the maximum diameter and the minimum diameter as the major axis and the minor axis, respectively, and calculating the average value of the major axis/minor axis of the respective composite particles.

The coefficient of variation (CV value) of the particle diameter in the composite particle is preferably 10% or less and more preferably 7% or less. The lower limit of the coefficient of variation (CV value) in the particle diameter of the composite particle is not particularly limited. The composite particle can be suitably used in a light-modulating material application when the coefficient of variation (CV value) in the particle diameter of the composite particle is equal to or less than the upper limit.

The coefficient of variation (CV value) can be measured as follows.

$$CV\ value\ (\%)\ =\ (\rho/Dn)\ \times\ 100$$

$\rho$: Standard deviation of particle diameter of composite particle
Dn: Average value of particle diameter of composite particle

The shape of the composite particle is not particularly limited. The shape of the composite particle may be a spherical shape or a shape other than a spherical shape such as a flat shape.

The 20% K value of the composite particle is preferably 5000 N/mm$^2$ or more, more preferably 5500 N/mm$^2$ or more and preferably 7000 N/mm$^2$ or less, more preferably 6500 N/mm$^2$ or less. When the 20% K value of the composite particle is equal to or more than the lower limit, the thickness of the light-modulating layer in a light-modulating material can be still further thickened and the light-modulating performance to adjust the incident light quantity, haze, and the like can be still further effectively enhanced in a light-modulating material used for a vehicle and the like. The damage to the substrate in a light-modulating material can be still further prevented when the 20% K value of the composite particle is equal to or less than the upper limit.

The 20% K value (compressive elastic modulus when composite particle is compressed by 20%) of the composite particle can be measured as follows.

One composite particle is compressed on the smooth indenter end face of a cylinder (diameter: 100 $\mu$m, made of diamond) under the conditions of 25°C, a compression rate of 0.3 mN/s, and a maximum test load of 20 mN using a micro compression testing machine. The load value (N) and compression displacement (mm) at this time are measured. The 20% K value (20% compressive elastic modulus) of the composite particle can be determined from the measured value thus attained by the following equation. As the micro compression testing machine, for example, "Micro compression testing machine MCT-W200" manufactured by Shimadzu Corporation and "Fisher Scope H-100" manufactured by Helmut Fisher GmbH are used. The 20% K value of the composite particle is preferably calculated by arithmetically averaging the 20% K values of 50 composite particles arbitrarily selected.

$$20\%\ K\ value\ (N/mm^2)\ =\ (3/2^{1/2})\bullet F\bullet S^{-3/2}\bullet R^{-1/2}$$

F: Load value when composite particle undergoes 20% compression deformation (N)
S: Compression displacement when composite particle undergoes 20% compression deformation (mm)
R: Radius of composite particle (mm)

The K value universally and quantitatively expresses the hardness of the composite particle. The hardness of the composite particle can be quantitatively and unambiguously expressed by using the K value.

The compression recovery rate of the composite particle is preferably 70% or more, more preferably 80% or more and preferably 95% or less, more preferably 90% or less. When the compression recovery rate of the composite particle is equal to or more than the lower limit and equal to or less than the upper limit, the thickness of the light-modulating layer in a light-modulating material can be still further thickened and the light-modulating performance to adjust the incident light quantity, haze, and the like can be still further effectively enhanced in a light-modulating material used for a vehicle and the like.

The compression recovery rate of the composite particle can be measured as follows.

The particles are scattered on a sample table. Loading (reverse load value) is applied to one composite particle scattered on the smooth indenter end face of a cylinder (diameter: 100 $\mu$m, made of diamond) at 25°C in the center direction of the composite particle using a micro compression testing machine until a load of 1 gf is applied to the composite particle. Thereafter, unloading is performed until to have the origin load value (0.40 mN). The load-compression displacement during this period is measured, and the compression recovery rate can be determined by the following equation. Incidentally, the loading rate is set to 0.33 mN/sec. As the micro compression testing machine, for example, "Micro compression testing machine MCT-W200" manufactured by Shimadzu Corporation and "Fisher Scope H-100" manufactured by Helmut Fisher GmbH are used.

$$Compression\ recovery\ rate\ (\%)\ =\ [L2/L1]\ \times\ 100$$

L1: Compression displacement from origin load value to reverse load value when loading is applied
L2: Unloading displacement from reverse load value to origin load value when loading is released

The fracture strain of the composite particle is preferably 30% or more, more preferably 35% or more and preferably 80% or less, more preferably 70% or less. When the fracture strain of the composite particle is equal to or more than the lower limit and equal to or less than the upper limit, fracture of the composite particle can be still further suppressed, the thickness of the light-modulating layer in a light-modulating material can be still further thickened, and the light-modulating performance to adjust the incident light quantity, haze, and the like can be still further effectively enhanced in a light-modulating material used for a vehicle and the like.

The fracture load value of the composite particle is preferably 20 mN or more, more preferably 30 mN or more, still more preferably 40 mN or more and preferably 100 mN or less, more preferably 80 mN or less. When the fracture load value of the composite particle is equal to or more than the lower limit and equal to or less than the upper limit, fracture of the composite particle can be still further suppressed, the thickness of the light-modulating layer in a light-modulating material can be still further thickened, and the light-modulating performance to adjust the incident light quantity, haze, and the like can be still further effectively enhanced in a light-modulating material used for a vehicle and the like.

The fracture strain of the composite particle and the fracture load value of the composite particle can be measured as follows.

The composite particles are scattered on a sample table. Loading (fracture load value) is applied to one composite particle scattered in the center direction of the composite particle using a micro compression testing machine until the composite particle is fractured. Thereafter, the displacement when the composite particle is fractured is measured. The proportion of displacement at the time of fracture with respect to the particle diameter of the composite particle is taken as the fracture strain. Incidentally, the loading rate is set to 0.33 mN/sec. As the micro compression testing machine, for example, "Micro compression testing machine MCT-W200" manufactured by Shimadzu Corporation and "Fisher Scope H-100" manufactured by Helmut Fisher GmbH are used.

The total light transmittance of the composite particle is preferably less than 5%, more preferably 4% or less, and still more preferably 3% or less. The lower limit of the total light transmittance of the composite particle is not particularly limited. When the total light transmittance of the composite particle is equal to or less than the upper limit, the occurrence of light leakage can be still further effectively prevented and the occurrence of color unevenness in the light-modulating material can be still further effectively suppressed.

The total light transmittance of the composite particle can be measured as follows.

An evaluation sample in which the composite particles are disposed on a double-sided tape in a single layer is fabricated by sticking a transparent double-sided tape to the surface of a transparent plate (transparent acrylic plate or the like), uniformly spreading the composite particles all over the adhesive face of the double-sided tape, and thus attaching the composite particles onto the adhesive face. The total light transmittance is measured using the evaluation sample thus obtained. The total light transmittance can be measured, for example, using a spectrophotometer ("V-670" manufactured by JASCO Corporation). Incidentally, an integrating sphere can be used as a detector.

The L*a*b color system is sometimes used to represent the color of an object. In the L*a*b color system, brightness of color is represented using L* and chromaticity indicating hue and saturation is represented using a* and b*. The L* value of the composite particle is preferably 1 or more, more preferably 5 or more and preferably 20 or less, more preferably 15 or less. The a* value of the composite particle is preferably 0.01 or more, more preferably 0.05 or more and preferably 1 or less, more preferably 0.5 or less. The b* value of the composite particle is preferably 0.1 or more, more preferably 0.3 or more and preferably 3 or less, more preferably 2 or less. When the L* value of the composite particle, the a* value of the composite particle, and the b* value of the composite particle fall within the preferred ranges, the occurrence of light leakage can be still further effectively prevented and the occurrence of color unevenness in the light-modulating material can be still further effectively suppressed.

The L* value of the composite particle, the a* value of the composite particle, and the b* value of the composite particle can be measured as follows.

The L* value of the composite particle, the a* value of the composite particle, and the b* value of the composite particle are measured using the L*a*b color system in conformity with JIS Z8781-4: 2013. Specifically, 2.5 g of the composite particles are filled in a measuring container ("CR-A50" manufactured by Konica Minolta, Inc.). The L* value, a* value, and b* value of the composite particles filled are measured using a color and color difference meter ("CR-300" manufactured by Konica Minolta Co., Ltd.).

It is preferable that the surface of the composite particle is covered with a coating agent such as a silane coupling agent from the viewpoint of still further preventing the elution and diffusion of impurities. It is preferable that the coating film by the coating agent is a monomolecular film or a polymer film. The composite particle may not have the coating film.

The silane coupling agent is not particularly limited. Examples of the silane coupling agent include amino-based silane coupling agents such as γ-aminopropyltrimethoxysilane, N-β-(aminoethyl)-γ-aminopropyltrimethoxysilane, 3-[N-allyl-N-(2-aminoethyl)]aminopropyltrimethoxysilane, 3-(N-allyl-N-glycidyl)aminopropyltrimethoxysilane, 3-(N-allyl-N-methacryl)aminopropyltrimethoxysilane, and 3-(N,N-diglycidyl)aminopropyltrimethoxysilane; amide-based silane coupling agents such as N,N-bis[3-(methyldimethoxysilyl)propyl]amine, N,N-bis[3-(trimethoxysilyl)propyl]amine, N,N-bis[3-(methyldimethoxysilyl)propyl]ethylenediamine, N,N-bis[3-(trimethoxysilyl)propyl]ethylenediamine, N-glycidyl-N,N-bis[3-(methyldimethoxysilyl)propyl]amine, and N-glycidyl-N,N-bis[3-(trimethoxysilyl)propyl]amine; vinyl-based silane coupling agents such as vinyltriethoxysilane and vinyl-tris(2-methoxyethoxy)silane; methacrylic silane coupling agents such as γ-methacryloxypropyltrimethoxysilane; glycidyl-based silane coupling agents such as γ-glycidoxypropyltrimethoxysilane; and mercapto-based silane coupling agents such as γ-mercaptopropyltrimethoxysilane.

The method for covering the surface of the composite particle with a coating agent is not particularly limited. Examples of the method for covering the surface of the composite particle with a coating agent include a method in which the composite particle and the coating agent are mixed together in an inorganic solvent such as water or an organic solvent such as an alcohol and heated under stirring, the composite particle is separated by decantation and the like after heating, and the solvent is removed by drying under reduced pressure and the like and a method in which the composite particle and the coating agent are directly mixed together and heated.

It is preferable that the composite particle is used as a spacer in a light-modulating material capable of changing the state between a transparent state and an opaque state depending on state of voltage application. For example, the light-modulating material becomes transparent when a voltage is applied between the electrodes and the light-modulating material becomes opaque or the transparency of the light-modulating material decreases when a voltage is not applied between the electrodes. It is preferable that the composite particle is used as a spacer for light-modulating material. It is preferable that the composite particle is used in the application of a spacer for light-modulating material. The composite particle has favorable compression deformation properties, and thus the spacer can maintain a proper thickness of the light-modulating layer and the light-modulating performance to adjust the incident light quantity, haze, and the like can be still further effectively enhanced when the composite particle is used as a spacer to be disposed between two substrates of a light-modulating material. Furthermore, the composite particle is equipped with the configuration described above and thus can still further effectively prevent the occurrence of light leakage and still further effectively suppress the occurrence of color unevenness in the light-modulating material.

When the composite particle is used as a spacer for light-modulating material, the light-modulating material is preferably dimming glass, a dimming film, and the like. It is preferable that light-modulating materials such as dimming glass and a dimming film are used for window glass of a vehicle, a partition, and the like. Examples of the vehicle include cars, ships, and aircraft. It is preferable that the light-modulating materials such as dimming glass and a dimming film are used for window glass of vehicles such as cars, ships, and aircraft, a partition, and the like. The light-modulating material is preferably window glass or a partition and more preferably window glass of vehicles such as cars, ships, and aircraft or a partition. The light-modulating material may be window glass of vehicles such as cars, ships, and aircraft or may be a partition. The vehicle is preferably transportation facilities.

It is preferable that the composite particle contains a base particle body and a pigment in the base particle body. The base particle body is preferably a resin particle body. Incidentally, in the present specification, for example, "(meth)acrylate" means either or both of "acrylate" and "methacrylate" and "(meth)acrylic" means either or both of "acrylic" and "methacrylic".

Various organic substances are suitably used as the material of the composite particle and the material of the base particle body. Examples of the material of the composite particle and the material of the base particle body include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polycarbonate, polyamide, a phenol formaldehyde resin, a melamine formaldehyde resin, a benzoguanamine formaldehyde resin, a urea formaldehyde resin, a phenolic resin, a melamine resin, a benzoguanamine resin, a urea resin, an epoxy resin, an unsaturated polyester resin, a saturated polyester resin, polyethylene terephthalate, polysulfone, polyphenylene oxide, polyacetal, polyimide, polyamideimide, polyetheretherketone, polyethersulfone, a divinylbenzene polymer, and a divinylbenzene copolymer. Examples of the divinylbenzene copolymer and the like include a divinylbenzene-styrene copolymer and a divinylbenzene-(meth)acrylic acid ester copolymer. It is preferable that the material of the composite particle and the material of the base particle body are a polymer obtained by polymerizing one or two or more polymerizable monomers having an ethylenically unsaturated group since the compression deformation properties of the composite particle can be easily controlled within a suitable range.

When the composite particle and the base particle body are obtained by polymerizing a polymerizable monomer having an ethylenically unsaturated group, examples of the polymerizable monomer having an ethylenically unsaturated group include a non-crosslinkable monomer and a crosslinkable monomer.

Examples of the non-crosslinkable monomer include styrene monomers such as styrene, α-methylstyrene, and chlorostyrene; vinyl ether compounds such as methyl vinyl ether, ethyl vinyl ether, and propyl vinyl ether; acid vinyl ester compounds such as vinyl acetate, vinyl butyrate, vinyl laurate, and vinyl stearate; and halogen-containing monomers such as vinyl chloride and vinyl fluoride as vinyl compounds; alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene (meth)acrylate, and glycidyl (meth)acrylate; nitrile-containing monomers such as (meth)acrylonitrile; and halogen-containing (meth)acrylate compounds such as trifluoromethyl (meth)acrylate and pentafluoroethyl (meth)acrylate as (meth)acrylic compounds; olefin compounds such as diisobutylene, isobutylene, linearene, ethylene, and propylene as α-olefin compounds; and isoprene and butadiene as conjugated diene compounds.

Examples of the crosslinkable monomer include vinyl monomers such as divinylbenzene, 1,4-divinyloxybutane, and divinylsulfone as vinyl compounds; polyfunctional (meth)acrylate compounds such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di(meth)acrylate as (meth)acrylic compounds; triallyl (iso)cyanurate, triallyl trimellitate, diallyl phthalate, diallyl acrylamide, and diallyl ether as allyl compounds; silane alkoxide compounds such as tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, dimethyldiethoxysilane, diisopropyldimethoxysilane, trimethoxysilylstyrene, γ-(meth)acryloxypropyltrimethoxysilane, 1,3-divinyltetramethyldisiloxane, methylphenyldimethoxysilane, and diphenyldimethoxysilane; polymerizable double bond-containing silane alkoxides such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane; cyclic siloxanes such as decamethylcyclopentasiloxane; and modified (reactive) silicone oil such as one end-modified silicone oil, both ends silicone oil, and side chain type silicone oil as silane compounds; and carboxyl group-containing monomers such as (meth)acrylic acid, maleic acid, and maleic anhydride.

The composite particle and the base particle body can be obtained by uniformly mixing and dispersing the pigment in the polymerizable monomer having an ethylenically unsaturated group, and polymerizing the polymerizable monomer. The polymerization method is not particularly limited, and the polymerization can be performed by known methods such as radical polymerization, ionic polymerization, polycondensation (condensation polymerization, polycondensation), addition condensation, living polymerization, and living radical polymerization. Examples of this method include a method in which suspension polymerization is performed in the presence of a radical polymerization initiator, a seed polymerization method which is a method in which swelling and polymerizing a monomer together with a radical polymerization initiator using non-crosslinked seed particles, and a dispersion polymerization method.

A ball mill, a bead mill, a sand mill, an attritor, a sand grinder, a nanomizer, and the like may be used in order to uniformly mix and disperse the pigment in the polymerizable monomer having an ethylenically unsaturated group. In this case, a dispersant and the like may be added to enhance the dispersibility of the pigment.

The dispersant is not particularly limited. Examples of the dispersant include water-soluble macromolecules such as polyvinyl alcohol, starch, methyl cellulose, carboxymethyl cellulose, hydroxyethyl cellulose, and sodium poly(meth)acrylate. Furthermore, examples of the dispersant include barium sulfate, calcium sulfate, aluminum sulfate, calcium carbonate, calcium phosphate, talc, clay, and metal oxide powder.

(Pigment)

The composite particle according to the present invention contains a pigment. The pigment is not particularly limited. The pigment is preferably a pigment capable of decreasing the total light transmittance of the composite particle to less than 5%. The pigment may be a black pigment, a dark blue pigment, or a dark brown pigment. It is preferable that the pigment is a black pigment from the viewpoint of still further effectively preventing the occurrence of light leakage and the viewpoint of still further effectively suppressing the occurrence of color unevenness in the light-modulating material.

Examples of the black pigment include carbon black, lamp black, graphite, iron oxide, copper-chromium composite oxide, and copper-chromium-zinc composite oxide. The black pigment may be used singly, or two or more kinds thereof may be used concurrently.

Examples of the dark blue pigment include copper phthalocyanine, cobalt phthalocyanine, and cobalt aluminate. The dark blue pigment may be used singly, or two or more kinds thereof may be used concurrently.

Examples of the dark brown pigment include zinc ferrite and iron oxide. The dark brown pigment may be used singly, or two or more kinds thereof may be used concurrently.

It is preferable that the pigment includes carbon black, titanium black, aniline black, or iron oxide. The pigment may be used singly, or two or more kinds thereof may be used concurrently. It is preferable that the pigment is carbon black from the viewpoint of still further effectively preventing the occurrence of light leakage and the viewpoint of still further effectively suppressing the occurrence of color unevenness in the light-modulating material.

The carbon black is not particularly limited. Examples of the carbon black include channel black, roll black, furnace black, thermal black, ketjen black, and acetylene black. The carbon black may be used singly, or two or more kinds thereof may be used concurrently.

It is preferable that the surface of the pigment is covered with a polymer from the viewpoint of still further preventing the elution and diffusion of impurities. It is preferable that the surface of the pigment is covered with a polymer. It is preferable that the surface of the carbon black is covered with a polymer from the viewpoint of still further preventing the elution and diffusion of impurities. It is preferable that the surface of the carbon black is covered with a polymer. By using a pigment of which the surface is covered with a polymer, it is possible to effectively prevent the deterioration in the properties such as the electrical resistance of the composite particle even when the amount of the pigment blended is increased. Furthermore, as the surface of the pigment is covered with a polymer, the dispersibility of pigment is improved and the composite particle can be colored with the pigment in a smaller blended amount. Examples of the polymer which covers the surface of the pigment include a thermoplastic resin.

The thermoplastic resin is not particularly limited. Examples of the thermoplastic resin include an alkyd resin, a modified alkyd resin, a phenol resin, a natural resin-modified phenol resin, a maleic acid resin, a natural resin-modified maleic acid resin, a fumaric acid resin, ester gum, rosin, a petroleum resin, a coumarone resin, an indene resin, a polyester resin, a polyimide resin, a polyamide resin, a polycarbonate resin, a polyethylene resin, an epoxy resin, a phenoxy resin, a styrene resin, a vinyl resin, an acrylic resin, chlorinated rubber, a benzoguanamine resin, a urea resin, a polyolefin resin, an ethylene-vinyl acetate copolymer, and a urethane resin. The thermoplastic resin may be used singly, or two or more kinds thereof may be used concurrently.

The method for covering the surface of the pigment with the thermoplastic resin is not particularly limited. Examples of the method for covering the surface of the pigment with the thermoplastic resin include a method in which the pigment is pulverized in a hydrophobic solvent containing the thermoplastic resin using a pulverizing machine such as a ball mill and a method in which an aqueous dispersion of pigment is added to and mixed with a hydrophobic solvent containing the thermoplastic resin for emulsification and then water is distilled off from the mixture by heating.

The average particle diameter of the pigment is preferably 50 nm or more, more preferably 100 nm or more and preferably 350 nm or less, more preferably 300 nm or less. When the average particle diameter of the pigment is equal to or more than the lower limit and equal to or less than the upper limit, the dispersibility of the pigment is still further improved and the pigment can be still further uniformly mixed with the composite particle.

The average particle diameter of the pigment means an average particle diameter of the pigment measured using an arbitrary particle diameter measuring apparatus. For example, a particle size distribution measuring machine using principles such as laser light scattering, change in electrical resistance value, and image analysis after imaging can be utilized. Specifically, examples of the method for measuring the average particle diameter of the pigment include a method in which the particle diameters of about 100,000 pigment particles are measured using a particle size distribution measuring apparatus ("Multisizer 4" manufactured by Beckman Coulter, Inc.) and the average particle diameter thereof is determined. The average particle diameter denotes a number average particle diameter.

The content of the pigment is preferably 1% by weight or more, more preferably 2% by weight or more, still more preferably 5% by weight or more and preferably 15% by weight or less, more preferably 10% by weight or less, still more preferably 7% by weight or less in 100% by weight of the composite particle. When the content of the pigment is equal to or more than the lower limit and equal to or less than the upper limit, the occurrence of light leakage can be still further effectively prevented and the occurrence of color unevenness in the light-modulating material can be still further effectively suppressed.

(Composite-particle powder)

The composite-particle powder according to the present invention contains a plurality of the composite particles described above. The average particle diameter of the composite-particle powder is preferably 10 μm or more, more preferably 12 μm or more and preferably 100 μm or less, more preferably 35 μm or less. When the average particle diameter of the composite-particle powder is equal to or more than the lower limit and equal to or less than the upper limit, the space between two substrates in the light-modulating material can be still further widened and the thickness of the light-modulating layer can be still further thickened. As a result, the light-modulating performance to adjust the incident light quantity, haze, and the like can be still further effectively enhanced in a light-modulating material used for a vehicle and the like. The average particle diameter of the composite-particle powder can be appropriately set according to the application. The composite particle can be suitably used in a light-modulating material application when the average particle diameter of the composite-particle powder is 10 $\mu$m or more and 100 $\mu$m or less.

The average particle diameter of the composite-particle powder containing a plurality of composite particles means an average particle diameter measured for an arbitrary number of composite particles using an arbitrary particle diameter measuring apparatus. For example, a particle size distribution measuring machine using principles such as laser light scattering, change in electrical resistance value, and image analysis after imaging can be utilized. Specifically, examples of the method for measuring the average particle diameter of the composite-particle powder include a method in which the particle diameters of about 100,000 composite particles are measured using a particle size distribution measuring apparatus ("Multisizer 4" manufactured by Beckman Coulter, Inc.) and the average particle diameter thereof is determined. The average particle diameter denotes a number average particle diameter.

(Light-modulating material)

The light-modulating material according to the present invention includes a first member for light-modulating material, a second member for light-modulating material, and a light-modulating layer disposed between the first member for light-modulating material and the second member for light-modulating material. In the light-modulating material according to the present invention, the light-modulating layer includes a plurality of spacers. In the light-modulating material according to the present invention, the spacer is the composite particle described above.

Light-modulating layer:

It is preferable that the light-modulating layer exhibits light-modulating property. The light-modulating property is property in which the transmittance of light and the like change depending on the presence or absence of application of voltage and the incident light quantity, haze, and the like can be adjusted.

In addition, the light-modulating material is roughly classified into PDLC (Polymer Dispersed Liquid Crystal) type and SPD (Suspended Particle Device) type depending on the action mechanism of the slight-modulating layer.

When the light-modulating material is a PDLC type, it is preferable that the light-modulating layer contains a binder and a liquid crystal material dispersed in the binder.

The liquid crystal material is not particularly limited. The liquid crystal material may be any liquid crystal material as long as it exhibits the property of changing the orientation depending on state of voltage application. The liquid crystal material may be dispersed in the binder as a continuous phase or may be dispersed in the binder in the form of liquid crystal drops or liquid crystal capsules. Examples of the liquid crystal material include nematic liquid crystals and cholesteric liquid crystals.

Examples of the material of the cholesteric liquid crystal include steroid-based cholesterol derivatives, Schiff base-based, azo-based, azoxy-based, benzoic acid ester-based, biphenyl-based, terphenyl-based, cyclohexylcarboxylic acid ester-based, phenylcyclohexane-based, biphenylcyclohexane-based, pyrimidine-based, dioxane-based, cyclohexyl cyclohexane ester-based, cyclohexyl ethane-based, cyclohexane-based, tolan-based, alkenyl-based, stilbene-based, and condensed polycycle-based nematic liquid crystals and smectic liquid crystals. Furthermore, examples of the material of the cholesteric liquid crystal include materials obtained by adding chiral components of Schiff base-based, azo-based, ester-based, and biphenyl-based optically active materials to these mixed liquid crystals. The material of the cholesteric liquid crystal may be used singly, or two or more kinds thereof may be used concurrently.

The binder holds the liquid crystal material and suppresses flow of the liquid crystal material. The binder is not particularly limited as long as it does not dissolve in the liquid crystal material, has strength to withstand external force, and exhibits high transparency with respect to reflected light and incident light. Examples of the material of the binder include water-soluble macromolecular materials such as gelatin, polyvinyl alcohol, cellulose derivatives, polyacrylic acid polymer, ethyleneimine, polyethylene oxide, polyacrylamide, polystyrene sulfonate, polyamidine, and isoprene-based sulfonic acid polymer. Furthermore, examples of the material of the binder include materials which can be aqueous emulsifiable, such as a fluorine resin, a silicone resin, an acrylic resin, a urethane resin, and an epoxy resin. The material of the binder may be used singly, or two or more kinds thereof may be used concurrently.

It is preferable that the binder is crosslinked by a crosslinking agent. The crosslinking agent is not particularly limited as long as it is a compound which forms a crosslink between the binders and makes the binder a hard film or poorly soluble or insoluble. Examples of the crosslinking agent include acetaldehyde, glutaraldehyde, glyoxal, potassium alum hydrate of polyvalent metal salt compounds, adipic acid dihydrazide, melamine formalin oligomer, ethylene glycol diglycidyl ether, polyamide epichlorohydrin, and polycarbodiimide. The crosslinking agent may be used singly, or two or more kinds thereof may be used concurrently.

When the light-modulating material is a SPD type, it is preferable that the light-modulating layer contains a resin matrix and a light-modulating suspension dispersed in the resin matrix.

The light-modulating suspension contains a dispersion medium and light-modulating particles dispersed in the dispersion medium.

Examples of the light-modulating particles include carbon-based materials such as polyiodide and carbon black; metal materials such as copper, nickel, iron, cobalt, chromium, titanium, and aluminum, and inorganic compound materials such as silicon nitride, titanium nitride, and aluminum oxide. In addition, these materials may be particles covered with a polymer. The light-modulating particles may be used singly, or two or more kinds thereof may be used concurrently.

The dispersion medium disperses the light-modulating particles in a flowable state. It is preferable that the dispersion medium is a material which selectively adheres to the light-modulating particles, covers the light-modulating particles, and acts so that the light-modulating particles move to the phase-separated droplet phase at the time of phase separation from the resin matrix and does not exhibit electrical conductivity and affinity for the resin matrix. Furthermore, it is preferable that the dispersion medium is a liquid copolymer having a refractive index close to that of the resin matrix when a light-modulating laminate is formed. As the liquid copolymer, a (meth)acrylic acid ester oligomer having a fluoro group or a hydroxyl group is preferable and a (meth)acrylic acid ester oligomer having a fluoro group and a hydroxyl group is more preferable. When such a copolymer is used, the monomer unit of the fluoro group or hydroxyl group is directed to the light-modulating particles and the remaining monomer units stabilize the droplets of the light-modulating suspension in the resin matrix. For this reason, the light-modulating particles are likely to be dispersed in the light-modulating suspension, and the light-modulating particles are likely to be induced into the droplets to be phase separated at the time of the phase separation from the resin matrix.

Examples of the (meth)acrylic acid ester oligomer having a fluoro group or a hydroxyl group include a 2,2,2-trifluoroethyl methacrylate/butyl acrylate/2-hydroxyethyl acrylate copolymer, a 3,5,5-trimethylhexyl acrylate/2-hydroxypropyl acrylate/fumaric acid copolymer, a butyl acrylate/2-hydroxyethyl acrylate copolymer, a 2,2,3,3-tetrafluoropropyl acrylate/butyl acrylate/2-hydroxyethyl acrylate copolymer, a 1H,1H,5H-octafluoropentyl acrylate/butyl acrylate/2-hydroxyethyl acrylate copolymer, a 1H,1H,2H,2H-heptadecafluorodecyl acrylate/butyl acrylate/2-hydroxyethyl acrylate copolymer, 2,2,2-trifluoroethyl methacrylate/butyl acrylate/2-hydroxyethyl acrylate copolymer, a methacrylate 2,2,3,3-tetrafluoropropyl/butyl acrylate/2-hydroxyethyl acrylate copolymer, a 1H,1H,5H-octafluoropentyl methacrylate/butyl acrylate/2-hydroxyethyl acrylate copolymer, and a 1H,1H,2H,2H-heptadecafluorodecyl methacrylate/butyl acrylate/2-hydroxyethyl acrylate copolymer. Moreover, it is more preferable that these (meth)acrylic acid ester oligomers have both a fluoro group and a hydroxyl group.

The weight average molecular weight of the (meth)acrylic acid ester oligomer is preferably 1000 or more, more preferably 2000 or more and preferably 20000 or less, more preferably 10000 or less.

The weight average molecular weight denotes the weight average molecular weight in terms of polystyrene measured by gel permeation chromatography.

When the light-modulating material is a SPD type, the light-modulating layer can be fabricated using a resin material for forming the resin matrix and the light-modulating suspension.

It is preferable that the resin material is a resin material which is cured by being irradiated with an energy ray. Examples of the resin material which is cured by being irradiated with an energy ray include a macromolecular composition containing a photopolymerization initiator and a macromolecular compound which is cured by energy rays such as ultraviolet rays, visible rays, and electron rays. Examples of the macromolecular composition include a macromolecular composition containing a polymerizable monomer having an ethylenically unsaturated group and a photopolymerization initiator. Examples of the polymerizable monomer having an ethylenically unsaturated group include a non-crosslinkable monomer and a crosslinkable monomer.

Examples of the non-crosslinkable monomer include the non-crosslinkable monomers mentioned above. Examples of the crosslinkable monomer include the crosslinkable monomers mentioned above.

Examples of the photopolymerization initiator include 2,2-dimethoxy-1,2-diphenylethane-1-one, 1-(4-(2-hydroxyethoxy)phenyl)-2-hydroxy-2-methyl-1-propane-1-on, bis(2,4,6-trimethylbenzoyl)phenylphosphine oxide, 2-hydroxy-2-methyl-1-phenylpropan-1-one, and (1-hydroxycyclohexyl)phenyl ketone.

The resin material may contain an organic solvent-soluble resin, a thermoplastic resin, and poly(meth)acrylic acid. Moreover, the resin material may contain various kinds of additives such as a coloring inhibitor, an antioxidant, and an adhesive property imparting agent and may contain a solvent.

First member for light-modulating material and second member for light-modulating material (these are also referred to as member for light-modulating material, respectively):

The material of the member for light-modulating material is not particularly limited. It is preferable that the member for light-modulating material is a transparent substrate. The material of the first member for light-modulating material and the material of the second member for light-modulating material may be the same as or different from each other. Examples of the material of the member for light-modulating material include a glass plate and a resin film. Examples of the glass plate include soda lime glass for general construction, lead glass, borosilicate glass, and glass having various compositions in other applications, and functional glass such as heat reflecting glass, heat absorbing glass, and tempered glass. Examples of the resin film include polyester films such as polyethylene terephthalate, polyolefin films such as polypropylene, and acrylic resin films. The transparent substrate is preferably a glass plate or a resin film and more preferably a resin film because of excellent transparency, moldability, adhesive property, processability and the like thereof.

The member for light-modulating material preferably includes a substrate body and a transparent conductive film formed on the surface of the substrate body so that a voltage for light modulation can be applied. Examples of the transparent conductive film include indium tin oxide (ITO), $SnO_2$, and $In_2O_3$.

The visible light transmittance of the member for light-modulating material is preferably 75% or more and more preferably 80% or more from the viewpoint of still further enhancing the visibility of the light-modulating material.

The visible light transmittance of the member for light-modulating material can be measured by spectrometry and the like in conformity with ISO 13837: 2008.

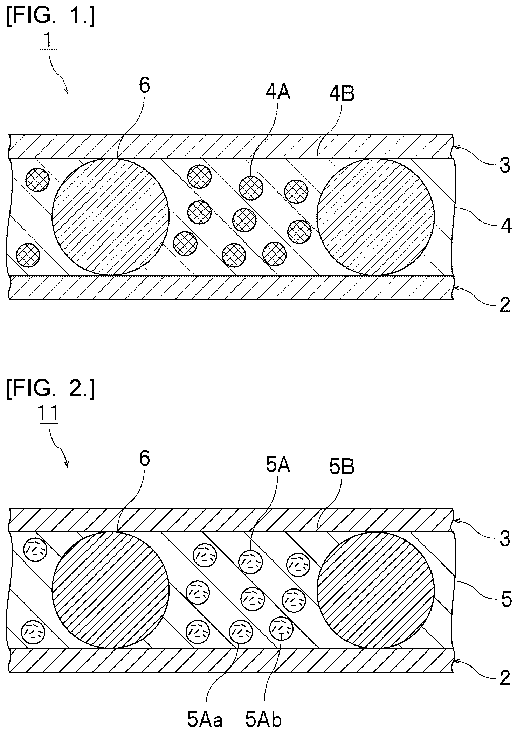

Fig. 1 is a cross-sectional view schematically illustrating a PDLC-type light-modulating material using the composite particle according to an embodiment of the present invention as a spacer for light-modulating material. Incidentally, in Fig. 1, the size, thickness, shape, added amount and the like of the light-modulating layer and composite material are appropriately changed from the actual size and shape for convenience of illustration.

A PDLC-type light-modulating material 1 illustrated in Fig. 1 includes a first member for light-modulating material 2, a second member for light-modulating material 3, and a light-modulating layer 4. The light-modulating layer 4 is sandwiched between the first member for light-modulating material 2 and the second member for light-modulating material 3. The light-modulating layer 4 is disposed between the first member for light-modulating material 2 and the second member for light-modulating material 3. A sealing agent may be disposed around the light-modulating layer 4 between the first member for light-modulating material 2 and the second member for light-modulating material 3.

The light-modulating layer 4 contains a liquid crystal capsule 4A, a binder 4B, and a composite particle 6. The liquid crystal capsule 4A is a liquid crystal material. The liquid crystal capsule 4A is dispersed in the binder 4B. The liquid crystal capsule 4A is held in the binder 4B in the form of a capsule. The liquid crystal material may be dispersed in the binder in the form of a capsule, or the liquid crystal material may be dispersed in the binder as a continuous phase.

The composite particle 6 is used as a spacer for light-modulating material. The composite particle 6 is in contact with the first member for light-modulating material 2 and the second member for light-modulating material 3. The composite particle 6 controls the gap between the first member for light-modulating material 2 and the second member for light-modulating material 3.

A transparent electrode is formed (not illustrated) on the surface of the first member for light-modulating material 2 and on the surface of the second member for light-modulating material 3, respectively. Examples of the material of the transparent electrode include indium tin oxide (ITO).

The orientation of the liquid crystal molecules in the liquid crystal capsule 4A is not uniform in a state in which a voltage is not applied to the PDLC-type light-modulating material 1, and thus incident light is refracted on the surface or inside of the liquid crystal capsule 4A and scattered in the binder to be in an opaque state by the difference in refractive index between the binder 4B and the liquid crystal material.

The liquid crystal molecules in the liquid crystal capsule 4A are arranged in a direction parallel to the voltage when a voltage is applied to the PDLC-type light-modulating material 1. Light can be transmitted and a transparent state is attained when the refractive indexes of the binder 4B and liquid crystal material become equal to each other in this state.

Fig. 2 is a cross-sectional view schematically illustrating a SPD-type light-modulating material using the composite particle according to an embodiment of the present invention as a spacer for light-modulating material. Incidentally, in Fig. 2, the size, thickness, shape, added amount and the like of the light-modulating layer and composite material are appropriately changed from the actual size and shape for convenience of illustration.

A SPD-type light-modulating material 11 illustrated in Fig. 2 includes a first member for light-modulating material 2, a second member for light-modulating material 3, and a light-modulating layer 5. The light-modulating layer 5 is sandwiched between the first member for light-modulating material 2 and the second member for light-modulating material 3. The light-modulating layer 5 is disposed between the first member for light-modulating material 2 and the second member for light-modulating material 3.

The light-modulating layer 5 contains a droplet of light-modulating suspension 5A, a resin matrix 5B, and a composite particle 6. The droplet of light-modulating suspension 5A is dispersed in the resin matrix 5B. The droplet of light-modulating suspension 5A is held in the resin matrix 5B in the form of a droplet.

The droplet of light-modulating suspension 5A contains a dispersion medium 5Aa and a light-modulating particle 5Ab. The light-modulating particle 5Ab is dispersed in the dispersion medium 5Aa.

The composite particle 6 is used as a spacer for light-modulating material. The composite particle 6 is in contact with the first member for light-modulating material 2 and the second member for light-modulating material 3. The composite particle 6 controls the gap between the first member for light-modulating material 2 and the second member for light-modulating material 3.

A transparent electrode is formed (not illustrated) on the surface of the first member for light-modulating material 2 and on the surface of the second member for light-modulating material 3, respectively. Examples of the material of the transparent electrode include indium tin oxide (ITO).

In a state in which a voltage is not applied to the SPD-type light-modulating material 11, incident light is absorbed, scattered or reflected by the light-modulating particle 5Ab by the Brownian motion of the light-modulating particle 5Ab dispersed in the dispersion medium 5Aa constituting the droplet of light-modulating suspension 5A, the incident light cannot be transmitted through the light-modulating layer 5, and an opaque state is attained.

The light-modulating particles 5Ab are arranged in a direction parallel to the voltage when a voltage is applied to the SPD-type light-modulating material 11. For this reason, the incident light can pass between the arranged light-modulating particles 5Ab and can be transmitted through the light-modulating layer 5, and a transparent state is attained.

Hereinafter, the present invention will be specifically described with reference to Examples and Comparative Examples. The present invention is not limited only to the following Examples.

(Example 1)

(1) Fabrication of composite particle 1

Carbon black of which the surface was covered with a polymer was prepared. A dispersion was obtained by mixing 5 parts by weight of this carbon black, 47.5 parts by weight of divinylbenzene, and 47.5 parts by weight of tetramethylolmethane triacrylate. A mixed solution was obtained by adding 20 parts by weight of benzoyl peroxide to this dispersion and uniformly mixing these. The mixed solution obtained was put into 8500 parts by weight of a 3% by weight aqueous solution of polyvinyl alcohol, sufficiently stirred, and then adjusted so as to have a predetermined emulsion diameter using a homogenizer, thereby obtaining an emulsion.

This emulsion was transferred to a 20 liter reaction kettle equipped with a thermometer, a stirrer, and a reflux condenser, and heated to 85°C while being stirred in a nitrogen atmosphere to perform a polymerization reaction for 7 hours, and the resultant was further heated at 90°C for 3 hours to perform a polymerization reaction, thereby obtaining a polymerization reaction solution.

Thereafter, the polymerization reaction solution was cooled, and the particles produced were washed with water, methanol and acetone in this order, subjected to classification operation, and dried at 55°C overnight, thereby obtaining a composite particle 1 having a particle diameter of 10 $\mu$m.

(2) Fabrication of light-modulating material

Fabrication of PDLC-type light-modulating material:

A light-modulating film in which a known PDLC layer was disposed was fabricated except that the composite particles obtained were dispersed between two transparent and conductive ITO-deposited PET films at 5% by weight. A PDLC-type light-modulating material was fabricated by sandwiching the light-modulating film between two sheets of transparent glass.

Fabrication of SPD-type light-modulating material:

A light-modulating film in which a known SPD layer was disposed was fabricated except that the composite particles obtained were dispersed between two transparent and conductive ITO-deposited PET films at 5% by weight. A SPD-type light-modulating material was fabricated by sandwiching the light-modulating film between two sheets of transparent glass.

(Example 2)

A composite particle 2 having a particle diameter of 15 $\mu$m different from the particle diameter of the composite particle 1 was obtained by changing the classification conditions at the time of fabrication of the composite particle 1. A light-modulating material was fabricated in the same manner as in Example 1 except that the composite particle 2 was used instead of the composite particle 1.

(Example 3)

A composite particle 3 having a particle diameter of 20 $\mu$m different from the particle diameter of the composite particle 1 was obtained by changing the classification conditions at the time of fabrication of the composite particle 1. A light-modulating material was fabricated in the same manner as in Example 1 except that the composite particle 3 was used instead of the composite particle 1.

(Example 4)

A composite particle 4 having a particle diameter of 25 $\mu$m different from the particle diameter of the composite particle 1 was obtained by changing the classification conditions at the time of fabrication of the composite particle 1. A light-modulating material was fabricated in the same manner as in Example 1 except that the composite particle 4 was used instead of the composite particle 1.

(Example 5)

A composite particle 5 having a particle diameter of 35 $\mu$m different from the particle diameter of the composite particle 1 was obtained by changing the classification conditions at the time of fabrication of the composite particle 1. A light-modulating material was fabricated in the same manner as in Example 1 except that the composite particle 5 was used instead of the composite particle 1.

(Example 6)

A composite particle 6 having a particle diameter of 97 $\mu$m different from the particle diameter of the composite particle 1 was obtained by changing the classification conditions at the time of fabrication of the composite particle 1. A light-modulating material was fabricated in the same manner as in Example 1 except that the composite particle 6 was used instead of the composite particle 1.

(Comparative Example 1)

A composite particle having a particle diameter of 10 $\mu$m was obtained in the same manner as in Example 1 except that 5 parts by weight of carbon black of which the surface was covered with a polymer was not added at the time of fabrication of the composite particle 1. Dyeing was performed using the particles obtained and a dye ("KAYALON POLYETER BLACK TN200" manufactured by Nippon Kayaku Co., Ltd.), washing was performed with water and methanol in this order, drying was performed at 55°C overnight, thereby obtaining a composite particle 7 having a particle diameter of 10 $\mu$m. A light-modulating material was fabricated in the same manner as in Example 1 except that the composite particle 7 was used instead of the composite particle 1.

(Comparative Example 2)

A composite particle 8 having a particle diameter of 5 $\mu$m different from the particle diameter of the composite particle 1 was obtained by changing the classification conditions at the time of fabrication of the composite particle 1. A light-modulating material was fabricated in the same manner as in Example 1 except that the composite particle 8 was used instead of the composite particle 1.

(Comparative Example 3)

A composite particle 9 having a particle diameter of 105 $\mu$m was obtained by changing the classification conditions at the time of fabrication of the composite particle. A light-modulating material was fabricated in the same manner as in Example 1 except that the composite particle 9 was used instead of the composite particle 1.

(Evaluation)

(1) Particle diameter of composite particle

The particle diameter was calculated by observing the composite particles obtained under an electron microscope.

(2) Average particle diameter of composite-particle powder

With regard to the composite-particle powder containing a plurality of composite particles obtained, the particle diameters of about 100,000 composite particles were measured using a particle size distribution measuring apparatus ("Multisizer 4" manufactured by Beckman Coulter, Inc.) and the average particle diameter thereof was determined.

(3) 20% K value of composite particle

With regard to the composite particles obtained, the 20% K value of composite particle was measured by the method described above using "Fisher Scope H-100" manufactured by Helmut Fisher GmbH.

(4) Fracture strain of composite particle and fracture load value of composite particle

With regard to the composite particles obtained, the fracture strain of composite particle and fracture load value of composite particle were measured by the method described above using "Fisher Scope H-100" manufactured by Helmut Fisher GmbH.

(5) Total light transmittance of composite particle

With regard to the composite particles obtained, the total light transmittance of composite particle was measured by the method described above using "V-670" manufactured by JASCO Corporation.

(6) L* value of composite particle, a* value of composite particle, and b* value of composite particle

With regard to the composite particles obtained, the L* value of composite particle, a* value of composite particle, and b* value of composite particle were measured by the method described above using "CR-A50" and "CR-300" manufactured by Konica Minolta, Inc..

(7) Color unevenness

With regard to the light-modulating materials obtained, it was visually evaluated whether or not color unevenness occurred. Color unevenness was judged according to the following criteria.

[Judging criteria for color unevenness]

○: Color unevenness has not occurred
Δ: Color unevenness has slightly occurred (no problem in practical use)
×: Color unevenness has occurred

(8) Light-modulating performance (haze)

With regard to the light-modulating materials obtained, the hazes when a voltage was applied and when a voltage was not applied were calculated. The haze was measured using "Haze meter TC-H3PDK" manufactured by Tokyo Denshoku CO., LTD. The haze attained was evaluated as the light-modulating performance of light-modulating material. The light-modulating performance was judged according to the following criteria.

[Judging criteria for light-modulating performance (haze) (when voltage is not applied)]

○: Haze is 98% or more
Δ: Haze is 95% or more and less than 98%
×: Haze is less than 95%

[Judging criteria for light-modulating performance (haze) (when voltage is applied)]

○: Haze is less than 4%
Δ: Haze is 4% or more and less than 6%
×: Haze is 6% or more
The results are presented in the following Table 1.

[Table 1]

| Evaluation | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Particle diameter of composite particle ($\mu$m) | | 10 | 15 | 20 | 25 | 35 | 97 | 10 | 5 | 105 |
| Average particle diameter of composite-particle powder ($\mu$m) | | 10 | 15 | 20 | 25 | 35 | 97 | 10 | 5 | 105 |
| 20% K value of composite particle (N/mm2) | | 6500 | 6180 | 5970 | 5610 | 5080 | 3950 | 5830 | 6930 | 3780 |
| Fracture strain of composite particle (%) | | 39 | 41 | 45 | 47 | 48 | 51 | 61 | 29 | 52 |
| Fracture load value of composite particle (mN) | | 43.1 | 47.1 | 52.1 | 53 | 58.3 | 66.2 | 45.3 | 19.6 | 65.1 |
| Total light transmittance of composite particle (%) | | 2. 9 | 3.2 | 3.3 | 2. 8 | 2.5 | 2.1 | 8.7 | 2.8 | 2.1 |
| L* value of composite particle | | 11.88 | 11.90 | 12.02 | 11.91 | 12.00 | 12.00 | 25.21 | 11.59 | 11.93 |
| a* value of composite particle | | 0.10 | 0.13 | 0.13 | 0.12 | 0.13 | 0.13 | 2.02 | 0.10 | 0.13 |
| b* value of composite particle | | 0.70 | 0.75 | 0.79 | 0.75 | 0.77 | 0.78 | 3.83 | 0.69 | 0.72 |
| Color unevenness | PDLC-type light-modulating material | ○ | ○ | ○ | ○ | ○ | Δ | ○ | Δ | Δ |
| | SPD-type light-modulating material | ○ | ○ | ○ | ○ | ○ | ○ | ○ | × | ○ |
| Light-modulating performance (haze) (when voltage is not applied) | PDLC-type light-modulating material | ○ | ○ | ○ | ○ | ○ | ○ | × | Δ | ○ |
| | SPD-type light-modulating material | ○ | ○ | ○ | ○ | ○ | ○ | × | Δ | ○ |

(continued)

| Evaluation | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Light-modulating performance (haze) (when voltage is applied) | PDLC-type light-modulating material | ○ | ○ | ○ | ○ | Δ | Δ | ○ | ○ | × |
| | SPD-type light-modulating material | ○ | ○ | ○ | ○ | ○ | ○ | ○ | ○ | Δ |

**EXPLANATION OF SYMBOLS**

1: PDLC-type light-modulating material
2: First member for light-modulating material
3: Second member for light-modulating material
4, 5: Light-modulating layer
4A: Liquid crystal capsule
4B: Binder
5A: Droplet of light-modulating suspension
5Aa: Dispersion medium
5Ab: Light-modulating particle
5B: Resin matrix
6: Composite particle
11: SPD-type light-modulating material

**Claims**

1. A composite particle comprising a pigment, the composite particle having a particle diameter of 10 μm or more and 100 μm or less.

2. The composite particle according to claim 1, wherein a 20% K value is 5000 N/mm$^2$ or more.

3. The composite particle according to claim 1 or 2, wherein a fracture strain is 30% or more and 70% or less.

4. The composite particle according to any one of claims 1 to 3, wherein a fracture load value is 20 mN or more and 100 mN or less.

5. The composite particle according to any one of claims 1 to 4, wherein a total light transmittance is less than 5%.

6. The composite particle according to any one of claims 1 to 5, wherein a content of the pigment is 2% by weight or more and 7% by weight or less in 100% by weight of the composite particle.

7. The composite particle according to any one of claims 1 to 6, wherein an average particle diameter of the pigment is 50 nm or more and 350 nm or less.

8. The composite particle according to any one of claims 1 to 7, wherein the pigment is carbon black.

9. The composite particle according to claim 8, wherein a surface of the carbon black is covered with a polymer.

10. The composite particle according to any one of claims 1 to 9, wherein the composite particle is used as a spacer in a light-modulating material capable of changing a state between a transparent state and an opaque state depending on state of voltage application.

11. The composite particle according to claim 10, wherein the light-modulating material is window glass of a vehicle or a partition.

12. A composite-particle powder comprising a plurality of the composite particles according to any one of claims 1 to 11, the composite-particle powder having an average particle diameter of 10 μm or more and 100 μm or less.

13. A light-modulating material comprising:

a first member for light-modulating material;
a second member for light-modulating material; and
a light-modulating layer disposed between the first member for light-modulating material and the second member for light-modulating material,

the light-modulating layer containing a plurality of spacers, and
the spacers being the composite particle according to any one of claims 1 to 11.

[FIG. 1.]

[FIG. 2.]

## INTERNATIONAL SEARCH REPORT

| International application No. |
|---|
| PCT/JP2018/032217 |

**A.   CLASSIFICATION OF SUBJECT MATTER**
Int. Cl. C08J3/16(2006.01)i, C08K3/04(2006.01)i, G02F1/1339(2006.01)i

According to International Patent Classification (IPC) or to both national classification and IPC

**B.   FIELDS SEARCHED**

Minimum documentation searched (classification system followed by classification symbols)
Int. Cl. C08J3/00-3/28, C08J7/04-7/06, C08K3/00-13/08, G02F1/1339,
B32B1/00-43/00

Documentation searched other than minimum documentation to the extent that such documents are included in the fields searched
```
Published examined utility model applications of Japan     1922-1996
Published unexamined utility model applications of Japan   1971-2018
Registered utility model specifications of Japan           1996-2018
Published registered utility model applications of Japan   1994-2018
```

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 3-64374 A (NIPPON PAINT CO., LTD.) 19 March 1991, page 7, lower left column, line 10 to page 8, upper left column, line 14 (Family: none) | 1, 8-9, 12 |
| X | JP 10-72557 A (KAO CORP.) 17 March 1998, paragraph [0128], production example 10-5 & US 6946202 B1, column 39, production example 10-5 & EP 795589 A1 & CN 1165838 A | 1, 5-6, 8, 12 |
| X | JP 2011-21126 A (TODA KOGYO CORP.) 03 February 2011, tables 3-5, examples 1-6 (Family: none) | 1, 6-8, 12 |
| X | JP 2005-62749 A (FUJI XEROX CO., LTD.) 10 March 2005, paragraphs [0107], [0108] (Family: none) | 1, 8, 12 |

☒   Further documents are listed in the continuation of Box C.          ☐   See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 03.10.2018 | 16.10.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/032217

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2006-274250 A (SOKEN CHEMICAL & ENGINEERING CO., LTD.) 12 October 2006, paragraphs [0036]-[0039], [0048], production example 4, example 1 & US 2009/0036559 A1, examples 1, 23 & KR 10-2007-0115913 A | 1, 7-8, 12 |
| X | JP 9-325343 A (SEKISUI FINE CHEMICAL CO., LTD.) 16 December 1997, claims, paragraphs [0030], [0032], [0064], [0070], [0071], example 1 (Family: none) | 1-6, 8, 10, 12-13 |
| Y |  | 11 |
| Y | JP 2-91622 A (ASAHI GLASS CO., LTD.) 30 March 1990, claims (Family: none) | 11 |
| Y | WO 2016/047770 A1 (NISSAN CHEMICAL INDUSTRIES, LTD.) 31 March 2016, paragraph [0201] & KR 10-2017-0060069 A & CN 107003570 A & TW 201627485 A | 11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4103633 A

- JP H8101394 A

**Non-patent literature cited in the description**

- KAYALON POLYETER BLACK TN200. Nippon Kayaku Co., Ltd,